(19) Europäisches Patentamt
European Patent Office
Office européen des brevets

(11) Veröffentlichungsnummer: **0 366 952 A1**

(12) **EUROPÄISCHE PATENTANMELDUNG**

(21) Anmeldenummer: **89118298.2**

(22) Anmeldetag: **03.10.89**

(51) Int. Cl.5: **C08K 5/37 , C08L 21/00 , C08K 3/04**

(30) Priorität: **15.10.88 DE 3835198**

(43) Veröffentlichungstag der Anmeldung: **09.05.90 Patentblatt 90/19**

(84) Benannte Vertragsstaaten: **BE DE ES FR GB IT LU NL**

(71) Anmelder: **BAYER AG**
**D-5090 Leverkusen 1 Bayerwerk(DE)**

(72) Erfinder: **Engels, Hans-Wilhelm, Dr.**
**Dickeicherfeld 2**
**D-5014 Kerpen 3(DE)**
Erfinder: **Eisele, Ulrich, Dr.**
**Alfred-Kubin-Strasse 13**
**D-5090 Leverkusen(DE)**

(54) **Verfahren zur Herstellung von Kautschukvulkanisaten mit verringerten Hystereseverlusten und Formkörper aus diesen Vulkanisaten.**

(57) Ruß-gefüllte Kautschukvulkanisate mit verminderten Hystereseverlusten kann man erhalten, wenn man unvulkanisierten Kautschuk mit Ruß in Gegenwart bestimmter Disulfide bei erhöhter Temperatur mischt und die so erhaltene Mischung vulkanisiert.

EP 0 366 952 A1

# Verfahren zur Herstellung von Kautschukvulkanisaten mit verringerten Hystereseverlusten und Formkörper aus diesen Vulkanisaten

Die Erfindung betrifft ein Verfahren zur Herstellung von Ruß-gefüllten Kautschukvulkanisation mit reduzierten Hystereseverlusten durch Scheren von Ruß-gefülltem Kautschuk in Gegenwart von bestimmten Disulfiden; die Erfindung betrifft weiterhin Formkörper aus derart hergestellten Vulkanisaten, wie z.B. Fahrzeugreifen, Förderbändern, Treibriemen und Luftfederbälge.

Unter Hystereseverlust versteht man in der Kautschuktechnologie den Energieverlust, der bei dynamischer Beanspruchung des Elastomeren irreversibel in Wärme umgewandelt wird. Als Meßgröße für Hystereseverluste dient der tan δ, der als Verhältnis von Verlustmodul zu Speichermodul definiert ist; vgl. z.B. auch DIN 53 513, DIN 53 535. Erniedrigung des tan δ im anwendungstechnisch wichtigen Temperatur-Frequenz-bzw. Amplituden-Bereich führt z.B. zu vermindertem Hitzeaufbau in Elastomeren. Reifen aus Kautschuk mit vermindertem Hystereseverlust zeichnen sich durch reduzierten Rollwiderstand und infolgedessen durch geringeren Treibstoffverbrauch der damit ausgestatteten Fahrzeuge aus.

Aus der US-PS 4 690 965 sind beispielsweise Ruß-gefüllte Kautschukvulkanisate bekannt, die aufgrund ihres Gehalts an Nitrosoanilinen einen verminderten Hitzeaufbau ("heat-build up"), d.h. auch einen verminderten Hystereseverlust, zeigen. Wegen der Gefahr der Bildung cancerogener Nitrosamine durch Umnitrosierung besteht jedoch der Wunsch nach Kautschukhilfsmitteln, die frei von Nitrosogruppen sind.

Überraschenderweise wurde gefunden, daß man Ruß-gefüllte Kautschukvulkanisate mit verminderten Hystereseverlusten dadurch erhalten kann, daß man unvulkanisierten Kautschuk mit Ruß in Gegenwart von Nitrosogruppen-freiem Di(acylaminoaryl)disulfid bei erhöhter Temperatur mischt und die so erhaltene Mischung auf an sich bekannte Weise vulkanisiert. Wesentlicher Vorteil des erfindungsgemäßen Verfahrens ist, daß die als Hystereseverbesserer verwendeten Disulfide die mechanischen Eigenschaften der Vulkanisate, wie z.B. Festigkeit, Dehnung und Spannungswert, nicht so stark verändern, daß die Vulkanisate den an die Fertigerzeugnisse (z.B. Reifen oder Treibriemen) gestellten Anfoderungen nicht mehr genügten.

Die Verwendung von Di(o-acylaminoaryl)-disulfiden als Mastikationsmittel für Natur- und Synthesekautschuk ist bekannt (US-PS 2 470 948). Das Mastizieren von Kautschuken dient bekanntlich dem Zweck der Viskositätserniedrigung. Dementsprechend werden die Hilfsmittel der US-PS 2 470 948 - wie für Mastikationsmittel üblich -vor Zugabe der üblichen Füllstoffe und Hilfsmittel, insbesondere vor der Rußzugabe, mit dem Kautschuk gemischt (z.B. auf einer Walze oder in einem Innenmischer bei 120 °C), und die Mischung wird dann so lange geschert, bis die gewünschte Viskosität erreicht ist. Die auf diese Weise eingestellte erniedrigte Viskosität ermöglicht erst das problemlose Einarbeiten von Füllstoffen und Hilfsmitteln; anders wäre eine homogene Mischung nur unter Schwierigkeiten zu erzielen. Das Scheren von Ruß/Kautschuk-Mischungen in Gegenwart von Di(-o-acylaminoaryl)-disulfiden wird in der US-PS 2 470 948 weder offenbart noch nahegelegt.

Gegenstand der Erfindung ist ein Verfahren zur Herstellung Ruß-gefüllter Kautschukvulkanisate durch Mischen von unvulkanisiertem Kautschuk, Ruß und gegebenenfalls weiteren Hilfsmitteln und anschließende Vulkanisation,

dadurch gekennzeichnet, daß man

(i) den unvulkanisierten Kautschuk,

(ii) 10 bis 120, vorzugsweise 30 bis 80 Gew.-%, bezogen auf Kautschuk (i), Ruß und

(iii) 0,1 bis 10, vorzugsweise 0,1 bis 3 Gew.-%, bezogen auf Kautschuk (i), Diphenylsulfid der Formel

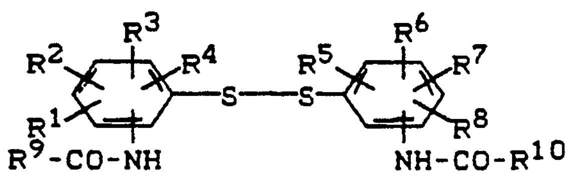

(I)

worin

$R^1$ bis $R^8$ unabhängig voneinander Wasserstoff, Fluor, Chlor, Brom, $C_1$-$C_8$-, vorzugsweise $C_1$-$C_4$-Alkyl, insbesondere Methyl, $C_1$-$C_8$-, vorzugsweise $C_1$-$C_4$-Alkoxy, insbesondere Methoxy, Nitro und

$R^9$ und $R^{10}$ unabhängig voneinander Wasserstoff, $C_1$-$C_{18}$-, vorzugsweise $C_1$-$C_{12}$-, insbesondere $C_1$-$C_3$-Alkyl, $C_2$-$C_{18}$-, vorzugsweise $C_2$-$C_{12}$-, insbesondere $C_2$-$C_4$-Alkenyl, $C_5$-$C_{12}$-Cycloalkyl- und -alkenyl, $C_5$-$C_{12}$-Aryl bedeuten,

wobei die obigen Kohlenstoffwasserstoffreste zu $R^9$ bzw. $R^{10}$ mit Halogen (Fluor, Chlor), Carboxyl, Hydroxy, Nitro, Amino, Di-$C_1$-$C_3$-alkylamino, Mercapto, $C_1$-$C_3$-Alkoxy und Nitro substituiert sein können, bei Massetemperaturen von mindestens 140° C, vorzugsweise von mindestens 150° C, und bei Scherraten von 1 bis 1000 $sec^{-1}$ derart mischt, daß mindestens 10 Gew.-% Ruß (ii), bezogen auf Kautschuk (i), zugegeben werden, bevor sich das Molekulargewicht des Kautschuks wesentlich vermindert hat.

Für das erfindungsgemäße Verfahren geeignete Kautschuke (i) umfassen neben Naturkautschuk auch Synthesekautschuke, wobei diese mindestens 5 Gew.-% copolymerisierte Einheiten, die von einem $C_4$-$C_{12}$-Dien stammen, enthalten. Bevorzugte Synthesekautschuke sind beispielsweise bei W. Hofmann, Kautschuk-Technologie, Gentner Verlag, Stuttgart 1980, beschrieben. Sie umfassen u.a.

BR - Polybutadien

ABR - Butadien/Acrylsäure-$C_1$-$C_4$-alkylester-Copolymerisate mit Acrylester-Gehalten von 5 bis 60, vorzugsweise von 15 bis 50 Gew.-%

CR - Polychloropren

IR - Polyisopren

SBR - Styrol/Butadien-Copolymerisate mit Styrolgehalten von 1 bis 60, vorzugsweise von 20 bis 50 Gew.-%

NBR - Butadien/Acrylnitril-Copolymerisate mit Acrylnitrilgehalten von 5 bis 60, vorzugsweise 10 bis 50 Gew.-%

und Mischungen dieser Kautschuke. Die für das erfindungsgemäße Verfahren zu verwendenden Kautschuke besitzen Glasübergangstemperaturen unter 20° C, vorzugsweise unter 0° C, bestimmt im Torsionsschwingungsversuch nach DIN 53 445.

Besonders bevorzugte Kautschuke (i) sind Polybutadien und Styrol/Butadien-Copolymerisate. Für Fahrzeugreifen, insbesondere für Laufflächen, werden SBR-Lösungs- und Emulsionspolymerisate bevorzugt. SBR-Lösungspolymerisate werden besonders bevorzugt. Der Gehalt an 1,2-Verknüpfungen kann innerhalb breiter Grenzen schwanken und wird im allgemeinen 5 bis 80 %, bezogen auf Anzahl copolymerisierte Butadienreste, betragen.

Einzelnen Kautschuken (i) können, falls gewünscht, vor der Vulkanisation vor oder nach dem Zusetzen von Ruß (ii) und Disulfid (iii) andere Kautschuke (i) zugemischt werden.

Für das erfindungsgemäße Verfahren sind alle verstärkenden Ruße geeignet. Bevorzugte Oberflächen betragen 35 bis 200 $m^2/g$ (CTAB-Bestimmung). Besonders genannt seien SAF-, HAF-, FEF-, ISAF- und SRF-Ruße. Gemische von zwei oder mehr verschiedenen Rußen bzw. von Rußen mit Kieselsäuren (mit und ohne Füllstoffaktivatoren) können ohne weiteres verwendet werden. Der Füllgrad kann in weiten Bereichen variiert werden, wobei 30 bis 80 Teile Ruß (ii) incl. gegebenenfalls Kieselsäure pro 100 Teile Kautschuk (i) bevorzugt werden.

Zu den bevorzugten Disulfiden (iii) zählen beispielsweise solche, deren Substituenten $R^1$ bis $R^8$ sämtliche Wasserstoff sind und deren Acylaminogruppen in 2,2′-, 3,3′- oder 4,4′-Stellung stehen, wobei die Substituenten $R^9$ und $R^{10}$ unabhängig voneinander, vorzugsweise aber jeweils die gleiche, folgende Bedeutung annehmen:

$-H$ 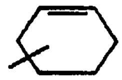

$-CH_3$ 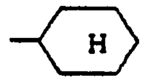

$-CH_2CH_3$ 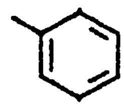

$-CH_2CH_2CH_3$ 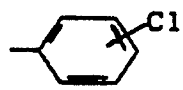

$-C_{17}H_{35}$

$-CH_2Cl$

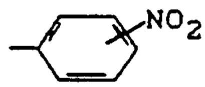

$-CHCl_2$

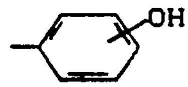

$-CCl_3$

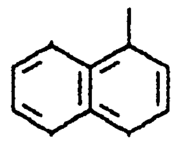

$-CF_3$

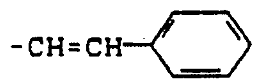

$-CH_2CH_2Cl$

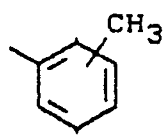

$-CH_2COOH$

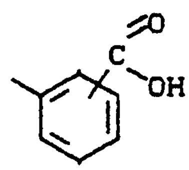

$-CH_2CH_2COOH$

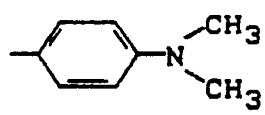

$-(CH_2)_3-COOH$

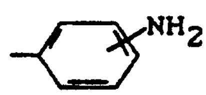

$-(CH_2)_4-COOH$

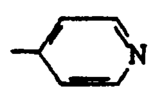

$-CH=CH_2$

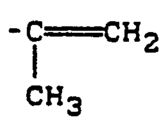

$-C_{17}H_{33}$

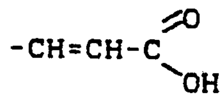

Zu den bevorzugten Disulfiden (iii) zählen beispielsweise auch die Verbindungen, deren Substituenten $R^9$ und $R^{10}$ jeweils Wasserstoff sind und deren Phenylenreste jeweils eine Chlor-, Nitro-, Methyl-, Butyl- oder Ethoxygruppe tragen.

Bevorzugte Beispiele derartiger Verbindungen wären z.B. die folgenden:

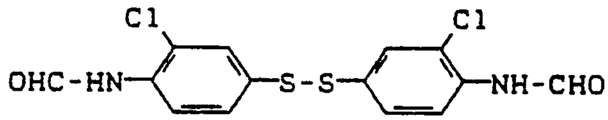

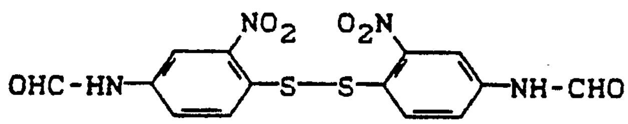

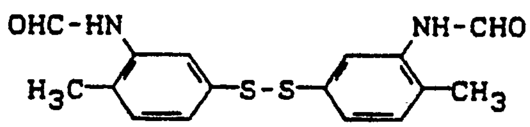

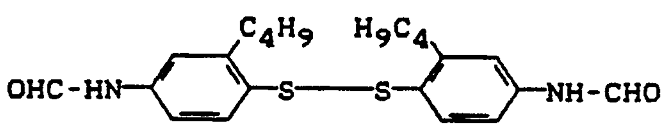

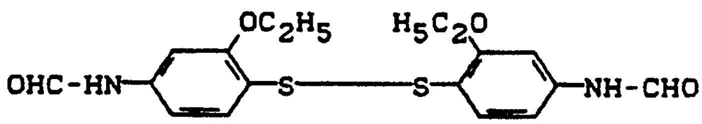

Die Disulfide (iii) sind literaturbekannt oder können nach an sich bekannten Verfahren hergestellt werden; vgl. z.B. US-PS 2 470 948; Farm., Ed. Sci. 29 (1974) 2, 120-128.

In Frage kommt hier vor allem die Acylierung von Diaminodiphenyldisulfiden, wobei diese wiederum hauptsächlich auf drei verschiedenen Wegen hergestellt werden können, nämlich

a) durch Hydrolyse von Benzthiazolen und Oxidation zum Disulfid, vgl. Beilstein, Bd. 13 E III, 907;

b) durch nucleophile Substitution von Nitroaromaten mit Natriumhydrogensulfid unter gleichzeitiger Reduktion der Nitrogruppe zur Aminogruppe und dann Oxidation des Mercaptans zum Disulfid; vgl. Methoden der Organischen Chemie (Houben-Weyl), Bd. 11/1, Georg-Thieme-Verlag, Stuttgart 1957, S. 416 und

c) durch Reduktion von Nitroarylsulfochloriden zu Amino-thiophenolen und dann Oxidation zum Disulfid, vgl. Methoden der Organischen Chemie (Houben-Weyl), Bd. 11/1, Georg-Thieme-Verlag, Stuttgart 1957, S.431.

In der Regel wird man solche Disulfide (iii) wählen, deren Halbwertszeit in der verwendeten Kautschukmischung bei der Verarbeitungstemperatur (Massetemperatur) unterhalb der halben Verarbeitungszeit liegt; dementsprechend also Disulfide (iii), deren Halbwertszeit unter 3 Minuten liegt. Besonders bevorzugt sind solche Disulfide (iii), deren Halbwertszeit 1/10 bis 1/3 der Verarbeitungszeit beträgt.

Für das erfindungsgemäße Verfahren können den Kautschukrohmischungen übliche Füllstoffe und Hilfsmittel, wie beispielsweise Weichmacher, Harze, Faktisse und Stabilisatoren zur Erzielung bestimmter Rohmischungs- oder Vulkanisationseigenschaften zugesetzt werden.

Die für das erfindungsgemäße Verfahren notwendige Massetemperatur des Mischgutes von vorzugsweise 140 bis 250° C, insbesondere von 150 bis 200° C, kann durch Wärmezuführung von außen oder durch entsprechende Friktion beim Mischen erzielt werden. Die angestrebte Massetemperatur wird dabei im allgemeinen unterhalb der Zersetzungstemperatur des verwendeten Kautschuks (i) liegen; in Sonderfällen, d.h. bei extrem kurzer Verweilzeit der Mischung in der Zone hoher Temperatur, kann auch die Zersetzungstemperatur des Kautschuks (i) überschritten werden, sofern dabei (wegen der kurzen Verweilzeit) keine merkliche Zersetzung eintritt. In den meisten Fällen mag es ratsam sein, sich bei der Wahl der Massetemperatur an der Halbwertzeit des verwendeten Disulfids (iii) bei dieser Temperatur zu orientieren.

Bevorzugte Mischaggregate sind die in der Kautschukindustrie üblichen Walzen, Innenmischer und Mischextruder, die in der Regel mit Scherraten von 1 bis 1000 $sec.^{-1}$, vorzugsweise 1 bis 200 $sec.^{-1}$ arbeiten.

Die Mischzeiten richten sich nach dem gewünschten Dispersionsgrad des Rußes (ii) und der übrigen Mischungsbestandteile in der Mischung. Sie liegen oft bei 30 bis 1000 sec, vorzugsweise 30 bis 360 sec. Bei der Verwendung von Innenmischern erhält man mit diesen Zeiten hervorragende Ergebnisse.

Eine "wesentliche Verminderung" des Kautschuk-Molekulargewichts im Sinne der Erfindung wäre ein Abfall des als Gewichtsmittel bestimmten Molekulargewichts $\overline{M}w$ um mehr als 10 %, vorzugsweise von mehr als 5 %.

Vorzugsweise wird der Ruß (ii) zugegeben, bevor eine Massetemperatur von 140° C, vorzugsweise von 150° C erreicht wird. Die Disulfide (iii) können dem Kautschuk (i) gemeinsam mit der gesamten Menge Ruß (ii) oder mit Teilen davon zugemischt werden, wobei im letzten Fall entsprechend der Rezeptur die Restmenge Ruß nachgemischt wird.

Zur Vulkanisation können die aus der Kautschuktechnik bekannten Vernetzungssysteme wie Schwefel, Peroxide, Polyisocyanate, Metalloxide, Phenolharze und deren Kombinationen eingesetzt werden. Man wird das zur Vulkanisation verwendete Vernetzungssystem vorzugsweise an der Art der verwendeten Kautschuke (i) ausrichten. Schwefelvernetzungssysteme werden besonders bevorzugt.

Die Vernetzungssysteme werden vorzugsweise bei Temperaturen unter 130° C, vorzugsweise unter 100° C, zugemischt. Die Vulkanisation kann bei Temperaturen von 100 bis 200° C, vorzugsweise 130 bis 180° C, gegebenenfalls unter einem Druck von 10 bis 200 bar, erfolgen.

Mit Hilfe des erfindungsgemäßen Verfahrens lassen sich dynamisch hoch beanspruchte Artikel wie Fahrzeugreifen, Förderbändern, Treibriemen wie Keil- und Zahnriemen, Luftfederbeläge u.a. herstellen. Weiterer Gegenstand der Erfindung sind daher Formkörper aus Vulkanisaten, die nach dem erfindungsgemäßen Verfahren erhältlich sind.

Die in den nachfolgenden Beispielen angegebenen Teile sind Gewichtsteile.

## Beispiele

Die nachfolgend aufgeführten Zusammensetzungen wurden in einem Meßkneter der Fa. Haake Mess-Technik GmbH & Co, Karlsruhe 41 bei verschiedenen Manteltemperaturen der Mischkammer und bei Umdrehungsgeschwindigkeiten der CAM-Schaufeln von 30 bis 100 U/Min. nach folgender Mischfolge hergestellt:

| nach [min] | |
|---|---|
| | Zugabe Kautschuk |
| 0,5 | Zugabe der halben Rußmenge zusammen mit dem Disulfid |
| 1,5 | Zugabe der 2. Rußhälfte und der restlichen Komponenten |
| 4-6 | Ausstoß |

Die Batch-Endtemperatur ergibt sich aus den Tabellen. Das Vulkanisiersystem wurde anschließend auf einer Laborwalze bei 40 bis 60° C nachträglich zugemischt.

| Rezeptur: | |
|---|---|
| 137,5 Teile | ®Buna SL 750 (Handelsprodukt der Fa. Bunawerke Hüls GmbH, Marl) enthaltend 100 Teile Lösungs-SBR und 37,5 Teile Öl |
| 70 Teile | Ruß N 220 (Handelsprodukt der Fa. Degussa, Wesseling) |
| 1 Teil | Stearinsäure |
| 3 Teile | Zinkoxid |
| 1 Teil | ®Vulkanox 4010 NA (Handelsprodukt der Fa. BAYER AG, Leverkusen) = IPPD = N-Isopropyl-N′-phenyl-p-phenylendiamin |
| 1 Teil | Disulfid der Formel I |
| 1,8 Teile | Schwefel |
| 1,2 Teile | ®Vulkacit NZ (Handelsprodukt der Fa. BAYER AG, Leverkusen) = TBBS = Benzthiazyl-2-tert.butylsulfenamid |

Die Vulkanisation erfolgte 20 Minuten bei 150° C.

Beispiele 1-3 und Vergleich 1

Diese Beispiele zeigen den Einfluß der Batch-Endtemperatur am Beispiel des 2,2′-Diformamidodiphenyldisulfids ($R^1$-$R^{10}$ = H). Das Vergleichsbeispiel V-1 enthält keinen Hystereseverbesserer. Δ tan δ gibt die prozentuale Änderung des tan δ gegenüber dem Disulfid-freien Standard wieder.

| Beispiel | 1 | 2 | 3 | V-1 |
|---|---|---|---|---|
| Manteltemperatur | 120° C | 150° C | 170° C | 120°/150° 170° C |
| Batchtemperatur | 152° C | 176° C | 197° C | 152°/176° 191° C |
| Festigkeit [MPa] | 20,5 | 23,5 | 20,6 | 23,0/23,2/18,8 |
| Reißdehnung [%] | 511 | 560 | 426 | 592/ 579/ 525 |
| Spannungswert 100* [MPa] | 2,1 | 2,1 | 2,7 | 1,9/2,1/1,9 |
| Spannungswert 300* [MPa] | 10,0 | 10,5 | 13,6 | 9,0/10,3/9,1 |
| tan δ 50° C | 0,33 | 0,33 | 0,32 | 0,33/0,33/0,34 |
| tan δ 90° C | 0,30 | 0,29 | 0,27 | 0,31/0,31 0,31 |
| Δ tan δ 90° C [%] | -3,3 | -6,5 | -13 | - |
| tan δ 110° C | 0,27 | 0,29 | 0,23 | 0,28/0,28/0,28 |
| Δ tan δ 110° C [%] | -3,6 | -10,8 | -18 | - |

* Der "Spannungswert 100" gibt die Spannung bei 100 % Dehnung an; für "Spannungswert 300" gilt Analoges.

Vergleiche 2-4

In diesen Vergleichsbeispielen wird durch Gegenüberstellung gegen Beispiel 3 der Einfluß der Mischfolge demonstriert. Auch hier war der Zusatz 2,2′-Diformamidodiphenyldisulfid.

In Vergleich V-2 wurde das Disulfid der Mischung erst nachträglich zusammen mit dem Vulkanisiersystem zugesetzt. Die Zugfestigkeit verschlechterte sich dadurch erheblich.

In Vergleich V-3 wurde ®Buna SL 750 zunächst 5 Minuten bei 120° C Manteltemperatur (Massetemperatur 150° C), in V-4 5 Minuten bei 170° C Manteltemperatur (Masseendtemperatur 190° C) mit dem erfindungsgemäß zu verwendenden Disulfid (wie bei einer üblichen Mastizierung) gemischt, dann wurde in einem zweiten Mischschritt die Grundmischung hergestellt und anschließend auf der Walze das Vulkanisiersystem zugesetzt. Dabei tritt keine deutliche Reduktion der Hystereseverluste auf.

| Beispiel | 3 | V-2 | V-3 | V-4 |
|---|---|---|---|---|
| Manteltemperatur bei Grundmischung | 170 °C | 120 °C | 120 °C | 120 °C |
| Batchendtemperatur | 198 °C | 154 °C | 153 °C | 150 °C |
| Festigkeit [MPa] | 20,6 | 12.9 | 20,9 | 17,8 |
| Reißdehnung [%] | 426 | 353 | 518 | 450 |
| Spannungswert 100 [MPa] | 2,7 | 2,1 | 2,1 | 1,8 |
| Spannungswert 300 [MPa] | 13,6 | 10,3 | 10,4 | 10,0 |
| $\Delta$ tan $\delta$ 30 °C [%] | -3 | n.b. | -1 | -3 |
| $\Delta$ tan $\delta$ 70 °C [%] | -11 | n.b. | +1 | -3 |
| $\Delta$ tan $\delta$ 110 °C [%] | -18 | n.b. | -3 | -4 |
| n.b. = nicht bestimmt | | | | |

Beispiele 4-9

Diese Beispiele zeigen den Einfluß der Position der Acylaminogruppe und der Substituenten $R^9$ und $R^{10}$ auf den Effekt des erfindungsgemäßen Verfahrens.

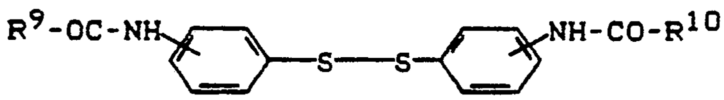

| Beispiel | $R^9$, $R^{10}$ | Position Acylaminogruppe | Festigkeit [MPa] | Spannungswert 300 [MPa] | Δ tan δ 100°C [%] |
|---|---|---|---|---|---|
| 4 | $-CH_3$ | 2,2' | 20,0 | 11,9 | -16 |
| 5 | $-CH_2-CH_3$ | 2,2' | 21,6 | 10,9 | -13 |
| 6 | $-CH=CH_2$ | 2,2' | 20,6 | 11,9 | -13 |
| 7 | 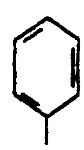 | 2,2' | 21,6 | 11,2 | -11 |
| 8 | -H | 4,4' | 21,1 | 10,7 | -8 |
| 9 | $-CH=CH-\overset{O}{\overset{\|}{C}}-OH$ | 4,4' | 22,0 | 11,7 | -12 |

## Ansprüche

1. Verfahren zur Herstellung Ruß-gefüllter Kautschukvulkanisate durch Mischen von unvulkanisiertem Kautschuk, Ruß und gegebenenfalls weiteren Hilfsmitteln und anschließende Vulkanisation, dadurch gekennzeichnet, daß man
(i) den unvulkanisierten Kautschuk,
(ii) 10 bis 120 Gew.-%, bezogen auf Kautschuk (i), Ruß und

(iii) 0,1 bis 10 Gew.-%, bezogen auf Kautschuk (i), Diphenylsulfid der Formel

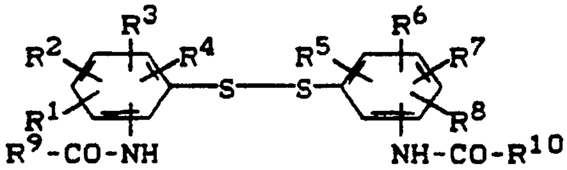

(I)

worin

$R^1$ bis $R^8$ unabhängig voneinander Wasserstoff, Fluor, Chlor, Brom, $C_1$-$C_8$-Alkyl, $C_1$-$C_8$-Alkoxy, Nitro und $R^9$ und $R^{10}$ unabhängig voneinander Wasserstoff, $C_1$-$C_{18}$-Alkyl, $C_2$-$C_{18}$-Alkenyl, $C_5$-$C_{12}$-Cycloalkyl- und -alkenyl, $C_5$-$C_{12}$-Aryl bedeuten,

bei Massetemperaturen von mindestens 140° C und bei Scherraten von 1 bis 1000 $sec^{-1}$ derart mischt, daß mindestens 10 Gew.-% Ruß (ii), bezogen auf Kautschuk (i), zugegeben werden, bevor sich das Molekulargewicht des Kautschuks wesentlich vermindert hat.

2. Verfahren nach Anspruch 1, wonach man 30 bis 80 Gew.-% Ruß, bezogen auf Kautschuk (i), einsetzt.

3. Verfahren nach Ansprüchen 1 und 2, wonach man 0,1 bis 3 Gew.-% Diphenylsulfid (iii), bezogen auf Kautschuk (i), einsetzt.

4. Verfahren nach Ansprüchen 1-3, wonach die Substituenten $R^1$ bis $R^8$ aus der Gruppe bestehend aus Wasserstoff, Chlor und Nitro derart ausgewählt sind, daß mindestens 6 dieser Substituenten Wasserstoff sind und die Substitution an beiden Phenylenringen symmetrisch ist.

5. Verfahren nach Ansprüchen 1-4, wonach die Substituenten $R^9$ und $R^{10}$ Wasserstoff, Methyl oder Ethyl sind.

6. Verfahren nach Ansprüchen 1-5, wonach die Acylaminogruppen des Disulfids (iii) in o-Position zum Schwefel stehen.

7. Verfahren nach Ansprüchen 1-6, wonach die Massetemperatur beim Mischen 150 bis 200° C beträgt.

8. Verfahren nach Ansprüchen 1-7, wonach die Vulkanisation bei Temperaturen von 100 bis 200° C durchgeführt wird.

9. Formkörper aus Vulkanisaten, erhältlich nach Verfahren gemäß Ansprüchen 1-8.

Europäisches Patentamt

# EUROPÄISCHER RECHERCHENBERICHT

Nummer der Anmeldung

EP 89 11 8298

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 508 134 (RUBBER AND PLASTICS RESEARCH ASSOCIATION OF GREAT BRITAIN)<br>* Ansprüche 12-14; Beispiel 4 * | 1-8 | C 08 K 5/37<br>C 08 L 21/00<br>C 08 K 3/04 |
| X | DATABASE CHEMICAL ABSTRACTS, (HOST: STN), 1980, Ref. Nr. 94(10):67057h, Columbus, Ohio, US; & JP-A-55 135 147 (SANSHIN CHEMICAL IND. CO. LTD) 21-10-1980<br>* Zusammenfassung * | 1-8 | |
| A,D | US-A-2 470 948 (T.P. PHILIP)<br>* Anspruch 1; Spalte 2, Zeilen 43-50 * | 1-8 | |

RECHERCHIERTE SACHGEBIETE (Int. Cl.5)

C 08 K
C 08 L

Der vorliegende Recherchenbericht wurde für alle Patentansprüche erstellt

| Recherchenort | Abschlußdatum der Recherche | Prüfer |
|---|---|---|
| DEN HAAG | 29-01-1990 | VAN HUMBEECK F.W.C. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)